# EUROPÄISCHE PATENTSCHRIFT

(11) **EP 3 583 688 B1**
(45) Veröffentlichungstag und Bekanntmachung des Hinweises auf die Patenterteilung: **17.02.2021**
(21) Anmeldenummer: 18710359.3
(22) Anmeldetag: 27.02.2018
(51) Int. Cl.: H02M 1/36

(54) **SCHALTVORRICHTUNG UND DEREN VERWENDUNG ZUR VORLADUNG**
SWITCHING DEVICE AND USE THEREOF FOR PRECHARGING
DISPOSITIF DE COMMUTATION ET SON UTILISATION POUR EFFECTUER UNE PRÉCHARGE

(30) Priorität: 23.03.2017 EP 17162549
(43) Veröffentlichungstag der Anmeldung: 25.12.2019
(73) Patentinhaber: Siemens Aktiengesellschaft, 80333 München (DE)
(72) Erfinder: SCHIERLING, Hubert, 91052 Erlangen (DE); WEIS, Benno, 91334 Hemhofen (DE)
(86) Internationale Anmeldenummer: PCT/EP2018/054727
(87) Internationale Veröffentlichungsnummer: WO 2018/172020

(56) Entgegenhaltungen:
- EP-A1- 2 988 404
- WO-A1-2016/101381
- US-A1- 2007 064 366
- US-A1- 2012 265 378

## Beschreibung

Die Erfindung betrifft eine elektrische Leistungsversorgung gemäß dem Oberbegriff des Hauptanspruchs und ein Verfahren zur Vorladung.

Herkömmlicherweise werden Gleichspannungsnetze über sogenannte Einspeise-Module vorgeladen. Dabei werden Kondensatoren von angeschlossenen Lasten nach Schließen eines Hauptschützes über einen Widerstand vorgeladen. Sobald eine derartige Vorladung beendet ist, wird dieser Widerstand überbrückt.

Während einer Vorladung wird in einem Vorladewiderstand ebenso viel Energie in Wärme umgesetzt, wie in den Kondensatoren gespeichert wird. Ein Vorladewiderstand ist nach Stand der Technik ein integraler Bestandteil einer Einspeisung. Zur Dimensionierung des Vorladewiderstands ist es daher wichtig, zu wissen, wie hoch die Gesamtkapazität aller angeschlossenen Verbraucher ist.

In ausgedehnten Gleichspannungsnetzen kann es jedoch vorkommen, dass die Gesamtkapazität so groß wird, dass der Ladewiderstand beim Vorladen überhitzt wird.

Herkömmlicherweise wird eine maximal an eine Einspeisung anschließbare Kapazität begrenzt. Diese Begrenzung ist durch eine geeignete Projektierung zu lösen. Der Nachteil dieser herkömmlichen Lösung liegt darin, dass die Projektierung falsch vorgenommen werden kann. Zudem bedeutet sie eine starke Einschränkung für flexible Anlagenkonfigurationen.

Eine zweite herkömmliche Lösung ist ein Vorladen eines Zwischenkreises nicht über einen Schütz und einen Widerstand, sondern über Thyristoren in der Einspeisung oder über einen separaten Thyristorsteller. Diese herkömmlichen Lösungen sind teurer als eine Widerstandsvorladung und schränken im Fall der Thyristorvorladung die Performance der Einspeisung ein.

Aus der EP 2 988 404 A1, der US 2007/064366 A1, der US 2012/265378 A1 und der WO 2016/101381 A1 ist jeweils ein elektrisches Leistungsversorgungssystem bekannt, das einen Transformator, mindestens einen an die Sekundärwicklung des Transformators elektrisch angeschlossenen, als ein Vorladewiderstand wirkenden elektrischen Widerstand umfasst, wobei parallel zu dem Widerstand jeweils ein Überbrückungsschalter elektrisch angeschlossen ist. Zur Speisung eines Gleichspannungsnetzes ist jeweils ein elektrisch in Reihe an den Widerstand angeschlossenes Gleichrichtermodul vorgesehen, an das elektrische Verbraucher jeweils mittels Kondensatoren oder elektrischen Speicher elektrisch angeschlossen sind. Mittels einer Schaltvorrichtung ist der Durchgangsstrom durch den Widerstand bei einem Vorladen der Kondensatoren begrenzbar.

Es ist Aufgabe der vorliegenden Erfindung bei einer elektrischen Leistungsversorgung mittels Gleichstromnetzen, insbesondere bei großen Gleichspannungsnetzen mit relativ großer Gesamtkapazität, bei einem Vorladen ein Überhitzen von Vorladewiderständen zu vermeiden.

Die Aufgabe wird durch ein elektrisches Leistungsversorgungssystem gemäß dem Hauptanspruch gelöst.

Gemäß einem ersten Aspekt wird ein elektrisches Leistungsversorgungssystem mit einem Transformator von einer Mittelspannungsebene auf eine Niederspannungsebene;
mindestens einen an die Sekundärwicklung des Transformators elektrisch angeschlossenen als ein Vorladewiderstand wirkenden elektrischen Widerstand, wobei parallel zu dem Widerstand jeweils ein Überbrückungsschalter elektrisch angeschlossen ist;
jeweils einem elektrisch in Reihe an den Widerstand angeschlossenen Gleichrichtermodul zur Speisung eines Gleichspannungsnetzes, an das elektrische Verbraucher, insbesondere elektrischen Motoren, jeweils mittels Kondensatoren oder elektrische Speicher elektrisch angeschlossen sind, ausgeführt, wobei mittels einer Schaltvorrichtung die Schalter über Draht oder drahtlos schaltet, der Durchgangsstrom durch den Widerstand bei einem Vorladen der Kondensatoren begrenzbar ist. Erfindungsgemäß ist mittels der Schalter das Gleichspannungsnetz in Teilgleichspannungsnetze aufteilbar. Das Leistungsversorgungssystem ist dazu ausgebildet, den Durchgangsstrom in dem Widerstand dadurch zu begrenzen, dass von allen Schaltern immer nur ein einziger geschlossen ist und alle Schalter sukzessive nacheinander geschlossen werden, um ihre angeschlossenen Kondensatoren vorzuladen und jeder nachfolgende Schalter erst dann geschlossen wird, wenn die Temperatur an dem Widerstand unter einen Schwellenwert abgesunken ist.

Gemäß einem zweiten Aspekt wird ein Laden der Kondensatoren ausgeführt, wobei die Schaltvorrichtung den Durchgangsstrom auf den maximal zulässigen Durchgangsstrom des Widerstandes mittels mindestens eines elektrischen Schalters begrenzt.

Es kann eine bestimmte Anzahl an elektrischen Verbrauchern oder eine bestimmte Menge an sogenannter Verlustenergie über einen jeweiligen elektrischen Vorladewiderstand für ein Vorladen schaltbar sein.

Aufgrund der vorgeschlagenen Lösung wird eine Überhitzung des als Vorladewiderstand wirkenden Widerstandes dadurch vermieden, dass das Gleichspannungsnetz durch Schalter in Teilnetze aufgeteilt wird, wobei jedes Teilnetz lediglich so viel Zwischenkreiskapazität beinhaltet, dass es von dem Widerstand vorgeladen werden kann. Die Teilnetze werden nacheinander vorgeladen, wobei zwischen dem Vorladen zweier Teilnetze so viel Zeit liegt, das der Widerstand genügend abkühlen kann.

Es ist erkannt worden, das es vorteilhaft ist, ein Gleichspannungsnetz zum Zweck der Vorladung in Teilnetze aufzuteilen, so dass der Vorlade-Widerstand lediglich so viel Kapazität vorlädt, dass er nicht überlastet wird.

Auf diese Weise wird ein Gleichspannungsnetz besser projektierbar, und es sind keine zusätzlichen Vorladeeinheiten erforderlich.

Weitere vorteilhafte Ausgestaltungen werden mit den Unteransprüchen beansprucht.

Gemäß einer vorteilhaften Ausgestaltung kann zwischen der Sekundärwicklung des Transformators und dem Widerstand ein Hauptschalter elektrisch zwischengeschaltet sein, der mittels der Schaltvorrichtung schaltbar ist. Eine Überhitzung des Widerstands wird dadurch vermieden, dass der Hauptschalter zur Vorladung nicht dauerhaft zugeschaltet wird, sondern getaktet betreibbar ist.

Gemäß einer weiteren vorteilhaften Ausgestaltung können die Schalter als mechanische oder elektronische Schalter ausgeführt sein.

Gemäß einer weiteren vorteilhaften Ausgestaltung kann zwischen der Sekundärwicklung des Transformators und dem Widerstand ein Hauptschalter elektrisch zwischengeschaltet sein, der mittels der Schaltvorrichtung schaltbar sein kann.

Gemäß einer weiteren vorteilhaften Ausgestaltung kann der Hauptschalter ein elektrischer oder elektronischer Schalter sein.

Gemäß einer weiteren vorteilhaften Ausgestaltung können die Kondensatoren Bestandteile von Zwischenkreisen sein, die die elektrischen Verbraucher über Wechselrichter leistungsversorgen, wobei beim Vorladen die Kondensatoren über den Widerstand vor einem Betrieb aufgeladen werden.

Gemäß einer weiteren vorteilhaften Ausgestaltung kann ein Laden oder Vorladen der Kondensatoren ausgeführt werden, wobei die Schaltvorrichtung die Summe der Ladeströme kleiner als der maximal zulässige Durchgangsstrom des Widerstandes mittels der Schalter schaltet.

Gemäß einer weiteren vorteilhaften Ausgestaltung kann ein Laden oder Vorladen der Kondensatoren ausgeführt werden, wobei die Schaltvorrichtung den maximal zulässigen Durchgangsstrom des Widerstandes mittels einer Zeitschaltung des Hauptschalters schaltet.

Gemäß einer weiteren vorteilhaften Ausgestaltung kann bei einer Verwendung eines Systems der Durchgangsstrom in dem Widerstand dadurch begrenzt werden, dass die Schalter als elektronische Schalter ausgeführt sind und die Schalter aus zwei antiseriellen Transistoren aufgebaut sind, wobei alle Transistoren der Schalter, die Strom von den Lasten zur Einspeisung führen, während des gesamten Vorladevorgangs ausgeschaltet sind und die Transistoren der Schalter, die Strom von der Einspeisung zu den Lasten führen, sukzessive nacheinander eingeschaltet werden, wobei der Transistor des nachfolgenden Schalters erst dann eingeschaltet wird, wenn die Temperatur in dem Widerstand unter einen Schwellenwert abgesunken ist.

Die Erfindung wird anhand von Ausführungsbeispielen in Verbindung mit den Figuren näher beschrieben. Es zeigen:
- Fig. 1: ein erstes Ausführungsbeispiel eines herkömmlichen elektrischen Leistungsversorgungssystems;
- Fig. 2: ein zweites Ausführungsbeispiel eines herkömmlichen elektrischen Leistungsversorgungssystems;
- Fig. 3: ein erstes Ausführungsbeispiel eines erfindungsgemäßen elektrischen Leistungsversorgungssystems;
- Fig. 4: ein zweites Ausführungsbeispiel eines erfindungsgemäßen elektrischen Leistungsversorgungssystems;
- Fig. 5: ein drittes Ausführungsbeispiel eines erfindungsgemäßen elektrischen Leistungsversorgungssystems;
- Fig. 6: ein Ausführungsbeispiel eines erfindungsgemäßen Verfahrens zur elektrischen Leistungsversorgung.

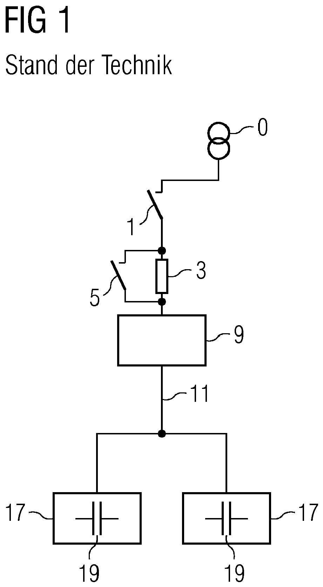

Fig. 1 zeigt ein erstes Ausführungsbeispiel eines herkömmlichen elektrischen Leistungsversorgungssystems.

Fig. 1 zeigt ein herkömmliches elektrisches Leistungsversorgungssystem mit einem Transformator 0 von einer Mittelspan nungsebene auf eine Niederspannungsebene. In dieser ist mindestens ein elektrischer Widerstand 3 an die Sekundärwicklung des Transformators 0 elektrisch angeschlossenen, wobei parallel zu dem Widerstand 3 jeweils ein Überbrückungsschalter 5 elektrisch angeschlossen ist. Jeweils elektrisch in Reihe an den Widerstand 3 ist ein Gleichrichtermodul 9 zur Speisung eines Gleichspannungsnetzes 11 angeschlossenen, an das elektrische Verbraucher 17, und zwar hier elektrische Frequenzumrichter zur Speisung von Motoren, jeweils mittels Kondensatoren 19 elektrisch angeschlossen sind.

Herkömmlicherweise werden Gleichspannungsnetze 11 über deren sogenannte Einspeise-Module vorgeladen. Dabei werden Kondensatoren 19 der angeschlossenen Lasten nach Schließen eines Hauptschalters 1, der ebenso als Hauptschütz bezeichnet werden kann, über den Widerstand 3 vorgeladen. Sobald die Vorladung beendet ist, wird der Widerstand 3 mit dem Überbrückungsschalter 5 überbrückt.

Während der Vorladung wird in dem Widerstand 3 ebenso viel Energie in Wärme umgesetzt, wie in den Kondensatoren 19 gespeichert wird. Der Widerstand 3 ist nach dem Stand der Technik ein integraler Bestandteil eines Einspeise-Modules. Zur Dimensionierung des Widerstandes 3 ist es daher wichtig, zu wissen, wie hoch die Gesamtkapazität C aller angeschlossenen elektrischen Verbraucher ist.

In ausgedehnten Gleichspannungsnetzen 11 kann es vorkommen, dass die Gesamtkapazität C der Kapazitäten 19 so groß wird, dass der Ladewiderstand 3 beim Vorladen überhitzt wird.

Die Kondensatoren 19 sind herkömmlicher Weise Bestandteile von in den Figuren nicht dargestellten elektrischen Zwischenkreisen, die die elektrischen Verbraucher 17 über in den Figuren nicht dargestellten Wechselrichter leistungsversorgen. Zwischenkreise und Wechselrichter können den elektrischen Verbrauchern 17 und den Kondensatoren 19 physikalisch oder körperlich zugeordnet werden.

Wechselrichter werden jeweils aus derartigen Zwischenkreisen gespeist. Ein jeweiliger Kondensator 19 wirkt zur Glättung der Gleichspannung des Gleichspannungsnetzes 11.

Wechselrichter werden ebenso als ein Inverter bezeichnet und sind elektrische Einrichtungen, die Gleichspannung in Wechselspannung, also Gleichstrom in Wechselstrom umrichten. Wechselrichter bilden, neben Gleichrichtern, Gleichspannungswandlern und Umrichtern, eine Untergruppe der Stromrichter.

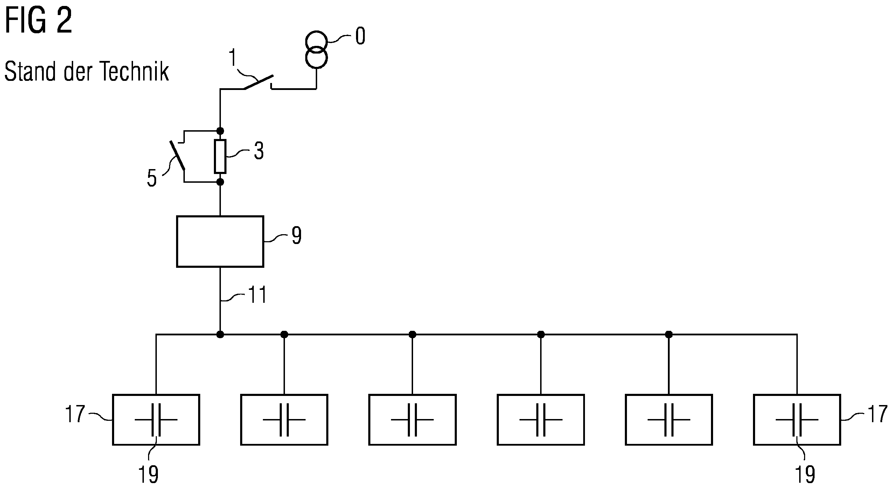

Fig. 2 zeigt ein zweites Ausführungsbeispiel eines herkömmlichen elektrischen Leistungsversorgungssystems. Es sind alle Merkmale der Fig. 2 dargestellt. Es ist ein ausgedehntes Gleichstromnetz 11 dargestellt, wobei die Gesamtkapazität C aller Kondensatoren 19 derart groß ist, dass die Gefahr einer Überhitzung des Widerstandes 3 bei einem Vorladen der Kondensatoren 19 gegeben sein kann.

In allen Figuren kennzeichnen gleiche Bezugszeichen gleiche Merkmale.

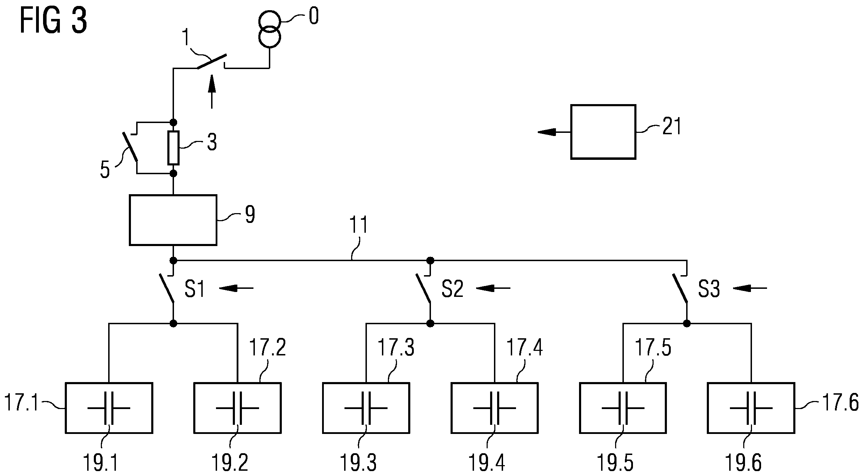

Fig. 3 zeigt ein erstes Ausführungsbeispiel eines erfindungsgemäßen elektrischen Leistungsversorgungssystems. Die Wirkungsweise wird anhand Fig. 3 näher beschrieben. Gemäß dem vorgeschlagenen Verfahren sind in einer Ausgangsstellung alle Schalter S1 bis S3 geöffnet und der Hauptschalter 1 kann geschlossen werden. Zur Vorladung werden in einem ersten Schritt Sr1 zunächst die Kondensatoren 19.1 und 19.2 mittels Schließen von dem Schalter S1 vorgeladen und nach Abschluss des Vorladens wird der Schalter S1 wieder geöffnet. Sobald nach diesem Vorgang der Widerstand 3 wieder abgekühlt ist, wird in einem zweiten Schritt Sr2 der Schalter S2 geschlossen. Nach dem Vorladen sind die Kondensatoren 19.3 und 19.4 aufgeladen, und es kann optional wieder der Schalter S1 geschlossen und geöffnet werden, um ein ungewünschtes Absinken der Zwischenkreisspannung der Lasten 17.1 und 17.2 zu verhindern. Anschließend wird auch der Schalter S2 wieder geöffnet. Zur Vorladung der Kondensatoren 19.5 und 19.6 wird in einem dritten Schritt Sr3 der Schalter S3 geschlossen und nach Abschluss der Vorladung wieder geöffnet. Auf diese Weise kann eine beliebige Anzahl von Teilnetzen vorgeladen werden. Danach wird der bei den Schritten Sr1, Sr2 und Sr3 als Vorladewiderstand wirkende Widerstand 3 mittels Schließens des Überbrückungsschalters 5 als elektrischer Widerstand infolge Kurzschließens unwirksam gemacht. Ebenso können alle Schalter S1, S2, S3 wieder geschlossen werden und das elektrische Leistungsversorgungssystem kann in Betrieb gehen. Elektrische Verbraucher 17 können ebenso als "Last" bezeichnet werden.

Für den Fall dass das Gleichrichtermodul 9 einen eigenen Zwischenkreis beinhaltet, ist dieser ebenso wie ein Zwischenkreis einer Last zu betrachten und mit einem Schalter S zu versehen.

Alle Schalter können von einer Schaltvorrichtung 21 angesteuert werden. Die Ansteuerung kann über Draht oder drahtlos erfolgen.

Zwischen der Sekundärwicklung des Transformators und dem Widerstand ist der Hauptschalter 1 elektrisch zwischengeschaltet. Der Hauptschalter 1 kann mittels einer Schaltvorrichtung schaltbar sein. Eine Überhitzung des Widerstands 3 wird in einer alternativen oder zusätzlichen Lösungsvariante dadurch vermieden, dass der Hauptschalter 1 zur Vorladung nicht dauerhaft zugeschaltet wird, sondern getaktet betreibbar ist. Nach einem ersten Schließen bleibt der Hauptschalter 1 lediglich bis zu einem Zeitpunkt t₁ geschlossen, solange die im Widerstand 3 anfallende Verlustenergie W=i² (t) *R*t₁ die zulässige Verlustenergie des Widerstandes 3 nicht übersteigt. Zum Zeitpunkt t₁ wird der Hauptschalter 1 geöffnet und bleibt solange geöffnet, bis der Widerstand 3 auf eine vorgegebene Temperatur abgekühlt ist. Danach wird der Hauptschalter 1 zu einem weiteren Ladezyklus geschlossen und nach dem gleichen Prinzip wieder geöffnet, bevor der Widerstand 3 überlastet wird. Nach einer Anzahl von Ladezyklen ist das Gleichspannungsnetz 11 schließlich geladen und kann betrieben werden. Der Hauptschalter 1 kann bevorzugt ein elektrischer oder elektronischer Schalter sein, der mittels der Schaltvorrichtung 21 angesteuert werden kann. Die Ansteuerung kann über Draht oder drahtlos erfolgen.

Eine jeweilige Schaltvorrichtung 21 kann eine Rechnereinrichtung, eine Speichereinrichtung und eine Erfassungseinrichtung, insbesondere zur Messung von elektrischen Strömen und Temperaturen an bestimmten Orten des elektrischen Leistungsversorgungssystems, sowie Sende- und/oder Empfangseinrichtungen aufweisen.

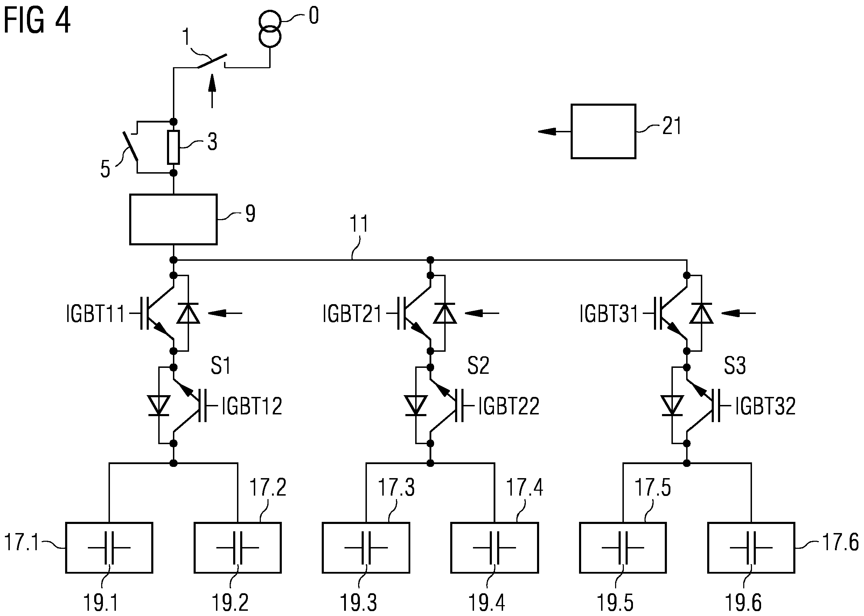

Fig. 4 zeigt ein zweites Ausführungsbeispiel eines erfindungsgemäßen elektrischen Leistungsversorgungssystems. In einer vorteilhaften Ausführung des Gleichspannungsnetzes 11 sind die Schalter S1, S2 und S3 als elektronische Schalter ausgeführt. Diese Ausführungsform ist in Figur 4 dargestellt.

Figur 4 zeigt eine Vorladung eines Gleichspannungsnetzes 11 mittels elektronischer Schalter. In diesem Fall kann das beschriebene Vorladeverfahren vereinfacht werden. Während der gesamten Vorladeprozedur sind verwendete IGBTs 12, 22 und 32 geöffnet. IGBT steht für Insulated Gate Bipolartransistor. Bipolartransistor mit isoliertem Tor ist ein bipolarer Transistor mit einem isolierten Gate bzw. Tor.

Zur Vorladung der Kondensatoren 19.1 und 19.2 wird dann zuerst der Bipolartransistor mit isoliertem Tor 11 eingeschaltet beziehungsweise geschlossen. Die Kondensatoren 19.1 und 19.2 werden aufgeladen bis der Aufladestrom gegen Null geht. Nach einer Wartezeit zur Abkühlung des Vorlade-Widerstands 3 wird danach der Bipolartransistor mit isoliertem Tor 21 geschlossen. Der Bipolartransistor mit isoliertem Tor 11 braucht hierbei nicht geöffnet zu werden, weil der geöffnete Bipolartransistor mit isoliertem Tor 12 verhindert, dass die Kondensatoren 19.3 und 19.4 durch die Kondensatoren 19.1 und 19.2 geladen werden. Anschließend wird nach einer weiteren Wartezeit der Bipolartransistor mit isoliertem Tor 31 geschlossen. Sind alle Lasten vorgeladen, werden die Bipolartransistoren mit isolierten Toren 12, 22 und 32 geschlossen und dass Gleichspannungsnetz kann den Betrieb aufnehmen.

Dieses Ausführungsbeispiel besitzt den Vorteil, dass die vorhergehend vorgeladenen Kondensatoren 19 sich nicht während der Ladezeit der nachfolgenden Kondensatoren 19 entladen können, beispielsweise durch parallel zu den Kondensatoren 19 liegende Symmetrisierungs-Widerstände, weil die Kondensatoren 19.1 und 19.2 über die Bipolartransistoren mit isolierten Toren 11, 12 ständig mit den bereits vorgeladenen Teilen des Gleichspannungsnetzes 11 verbunden sind.

Alle Schalter können von einer Schaltvorrichtung 21 angesteuert werden. Die Ansteuerung kann über Draht oder drahtlos erfolgen.

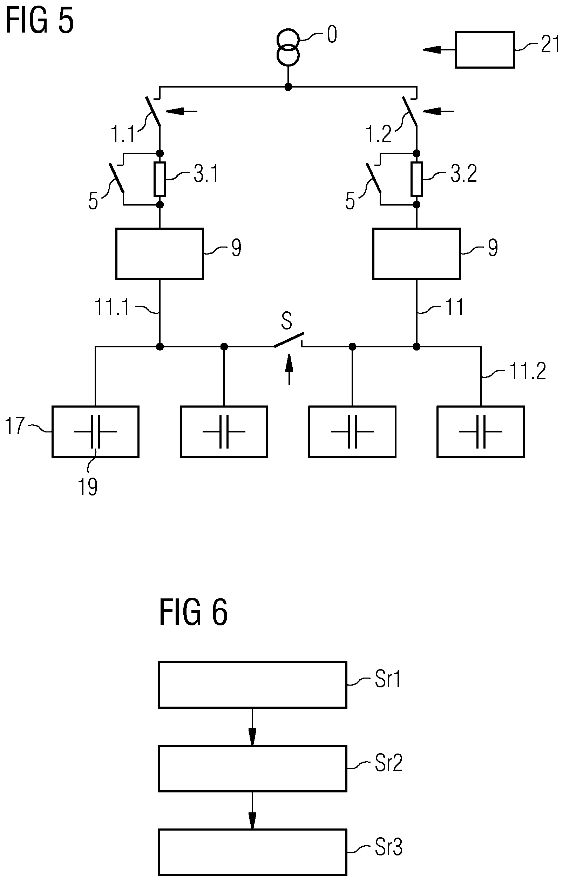

Fig. 5 zeigt ein drittes Ausführungsbeispiel eines erfindungsgemäßen elektrischen Leistungsversorgungssystems.
Für den Fall, dass das Gleichspannungsnetz 11 mit mehreren parallelen Gleichrichtermodulen 9 versorgt wird, kann das erfindungsgemäße Prinzip, ein Gleichspannungsnetz 11 zur Vorladung in Teilnetze 11.1 und 11.2 aufzuteilen, ebenso vorteilhaft angewendet werden, wenn die Leistungsfähigkeit der Vorlade-Widerstände 3 ausreichen würde, um das Netz vorzuladen. Eine derartige Konfiguration zeigt Figur 5.

Figur 5 zeigt eine Vorladung eines Gleichspannungsnetzes 11 oder Gleichspannungsnetzes 11 mit parallelen Einspeisungen.

Falls der Schalter S einen Kurzschluss darstellt, wie es dem Stand der Technik entspräche, so wird das Gleichspannungsnetz 11 durch Schließen der beiden Hauptschalter 1 vorgeladen. Schließt der Hauptschalter 1.1 früher als der Hauptschalter 1.2, so wird in dem Widerstand 3.1 eine größere Verlustleistung umgesetzt, als in dem Widerstand 3.2. Reicht die Leistungsfähigkeit der beiden Widerstände gerade aus, um das Netz vorzuladen, so kann der Widerstand 3.1 dabei überlastet werden.

Erfindungsgemäß wird eine Überlastung dadurch vermieden, dass der Schalter S eingefügt und im ungeladenen Zustand des Gleichspannungsnetzes 11 geöffnet wird. Dann ist jedem Widerstand 3 und Gleichrichtermodul 9 ein definiertes Teilnetz 11.1 oder 11.2 zugewiesen, so dass der Vorlade-Widerstand 3 einer jeweiligen Einspeisung ausgelegt ist. Damit können die Hauptschalter 1.1 und 1.2 völlig unabhängig voneinander geschlossen werden. Sind alle Kondensatoren 19 der Zwischenkreise der Lasten 17 aufgeladen, kann der Schalter S geschlossen werden und das elektrische Leistungsversorgungsnetz kann in Betrieb gehen.

Alle Schalter können von einer Schaltvorrichtung 21 angesteuert werden. Die Ansteuerung kann über Draht oder drahtlos erfolgen.

Fig. 6 zeigt ein Ausführungsbeispiel eines erfindungsgemäßen Verfahrens zur elektrischen Leistungsversorgung. Gemäß dem vorgeschlagenen Verfahren sind in einer Ausgangsstellung alle Schalter S1 bis S3 geöffnet und der Hauptschalter 1 kann geschlossen werden. Zur Vorladung werden in einem ersten Schritt Sr1 zunächst die Kondensatoren 19.1 und 19.2 mittels Schließen von dem Schalter S1 vorgeladen und nach Abschluss des Vorladens wird der Schalter S1 wieder geöffnet. Sobald nach diesem Vorgang der Widerstand 3 wieder abgekühlt ist, wird in einem zweiten Schritt Sr2 der Schalter S2 geschlossen. Nach dem Vorladen sind die Kondensatoren 19.3 und 19.4 aufgeladen und es kann optional wieder der Schalter S1 geschlossen und geöffnet werden, um ein unzulässiges Absinken der Zwischenkreisspannung der Lasten 17.1 und 17.2 zu verhindern. Danach wird auch der Schalter S2 wieder geöffnet., Zur Vorladung der Kondensatoren 19.5 und 19.6 wird in einem dritten Schritt Sr3 der Schalter S3 geschlossen und nach Abschluss der Vorladung wieder geöffnet. Auf diese Weise kann eine beliebige Anzahl von Teilnetzen vorgeladen werden. Sind alle Vorladungen abgeschlossen, wird der bei den Schritten Sr1, Sr2 und Sr3 als Vorladewiderstand wirkende Widerstand 3 mittels Schließens des Überbrückungsschalters 5 als elektrischer Widerstand infolge Kurzschließens unwirksam gemacht. Ebenso können alle Schalter S1, S2, S3 wieder geschlossen werden und das elektrische Leistungsversorgungssystem kann in Betrieb gehen.

## Patentansprüche

1. Elektrisches Leistungsversorgungssystem mit einem Transformator (0) von einer Mittelspannungsebene auf eine Niederspannungsebene;
mindestens einen an die Sekundärwicklung des Transformators (0) elektrisch angeschlossenen, als ein Vorladewiderstand wirkenden elektrischen Widerstand (3), wobei parallel zu dem Widerstand (3) jeweils ein Überbrückungsschalter (5) elektrisch angeschlossen ist;
jeweils einem elektrisch in Reihe an den Widerstand (3) angeschlossenen Gleichrichtermodul (9) zur Speisung eines Gleichspannungsnetzes (11), an das elektrische Verbraucher (17), insbesondere elektrischen Motoren, jeweils mittels Kondensatoren (19) oder elektrischen Speicher (20) elektrisch angeschlossen sind, wobei mittels einer Schaltvorrichtung (21), die Schalter (S; 1) über Draht oder drahtlos schaltet, der Durchgangsstrom durch den Widerstand (3) bei einem Vorladen der Kondensatoren (19) begrenzbar ist,
**dadurch gekennzeichnet, dass**
mittels der Schalter (S) das Gleichspannungsnetz (11) in Teilgleichspannungsnetze aufteilbar ist, und
das Leistungsversorgungssystem dazu ausgebildet ist, den Durchgangsstrom in dem Widerstand (3) dadurch zu begrenzen, dass
- von allen Schaltern (S) immer nur ein einziger geschlossen ist und
- alle Schalter (S) sukzessive nacheinander geschlossen werden, um ihre angeschlossenen Kondensatoren (19) vorzuladen und
- jeder nachfolgende Schalter (S) erst dann geschlossen wird, wenn die Temperatur an dem Widerstand (3) unter einen Schwellenwert abgesunken ist.

2. Elektrisches Leistungsversorgungssystem gemäß Anspruch 1,
**dadurch gekennzeichnet, dass**
die Schalter (S) als mechanische oder elektronische Schalter ausgeführt sind.

3. Elektrisches Leistungsversorgungssystem gemäß Anspruch 1 oder 2,
**dadurch gekennzeichnet, dass**
zwischen der Sekundärwicklung des Transformators (0) und dem Widerstand (3) ein Hauptschalter (1) elektrisch zwischengeschaltet ist, der mittels der Schaltvorrichtung (21) schaltbar ist.

4. Elektrisches Leistungsversorgungssystem gemäß Anspruch 3,
**dadurch gekennzeichnet, dass**
der Hauptschalter (1) ein elektrischer oder elektronischer Schalter ist.

5. Elektrisches Leistungsversorgungssystem gemäß einem der vorhergehenden Ansprüche,
**dadurch gekennzeichnet, dass**
die Kondensatoren (19) Bestandteile von Zwischenkreisen sind, die die elektrischen Verbraucher (17) über Wechselrichter leistungsversorgen, wobei beim Vorladen die Kondensatoren (19) über den Widerstand (3) vor einem Betrieb aufgeladen werden.

6. Elektrisches Leistungsversorgungssystem gemäß einem der Ansprüche 1 bis 5,
**dadurch gekennzeichnet, dass** das Leistungsversorgungssystem zum Laden der Kondensatoren (19) ausgebildet ist, wobei die Schaltvorrichtung (21) die Summe der Ladeströme kleiner als der maximal zulässige Durchgangsstrom des Widerstandes (3) mittels der Schalter (S) schaltet.

7. Elektrisches Leistungsversorgungssystem gemäß einem der Ansprüche 1 bis 5,
**dadurch gekennzeichnet, dass** das Leistungsversorgungssystem zum Laden der Kondensatoren (19) ausgebildet ist, wobei die Schaltvorrichtung (21) den maximal zulässigen Durchgangsstrom des Widerstandes (3) mittels einer Zeitschaltung des Hauptschalters (1) schaltet.

8. Elektrisches Leistungsversorgungssystem gemäß einem der Ansprüche 1 bis 7,
**dadurch gekennzeichnet, dass**
- die Schalter (S) als elektronische Schalter ausgeführt sind und
- die Schalter (S) aus zwei antiseriellen Transistoren aufgebaut sind,
wobei das Leistungsversorgungssystem dazu ausgebildet ist, den Durchgangsstrom in dem Widerstand (3) dadurch zu begrenzen, dass
- alle Transistoren der Schalter (S), die Strom von den Lasten (17) zur Einspeisung (9)führen, während des gesamten Vorladevorgangs ausgeschaltet sind und
- die Transistoren der Schalter (S), die Strom von der Einspeisung (9) zu den Lasten (17)führen, sukzessive nacheinander eingeschaltet werden, wobei
- der Transistor des nachfolgenden Schalters (S) erst dann eingeschaltet wird, wenn die Temperatur in dem Widerstand (3) unter einen Schwellenwert abgesunken ist.

## Claims

1. Electrical power supply system having
a transformer (0) for transforming from a medium-voltage level to a low-voltage level;
at least one electrical resistor (3) which is electrically connected to the secondary winding of the transformer (0) and acts as a precharging resistor, wherein a respective bypass switch (5) is electrically connected in parallel with the resistor (3);
a respective rectifier module (9), which is electrically connected in series with the resistor (3), for feeding a DC voltage grid (11) to which electrical consumers (17), in particular electric motors, are electrically connected by means of respective capacitors (19) or electrical stores (20), wherein, by means of a switching apparatus (21) which switches switches (S; 1) in a wired or wireless manner, the forward current can be limited by the resistor (3) when the capacitors (19) are precharged,
**characterized in that**
the DC voltage grid (11) can be divided into partial DC voltage grids by means of the switches (S), and
the power supply system is designed to limit the forward current in the resistor (3) by virtue of
- only a single switch out of all the switches (S) ever being closed and
- all the switches (S) being closed successively one after the other in order to precharge their connected capacitors (19) and
- each subsequent switch (S) being closed only when the temperature at the resistor (3) has fallen below a threshold value.

2. Electrical power supply system according to Claim 1,
**characterized in that**
the switches (S) are configured as mechanical or electronic switches.

3. Electrical power supply system according to Claim 1 or 2,
**characterized in that**
a main switch (1) which can be switched by means of the switching apparatus (21) is electrically interposed between the secondary winding of the transformer (0) and the resistor (3).

4. Electrical power supply system according to Claim 3,
**characterized in that**
the main switch (1) is an electrical or electronic switch.

5. Electrical power supply system according to one of the preceding claims,
**characterized in that**
the capacitors (19) are component parts of intermediate circuits which supply the electrical consumers (17) with power by way of inverters, wherein during precharging the capacitors (19) are charged before operation via the resistor (3).

6. Electrical power supply system according to one of Claims 1 to 5,
**characterized in that** the power supply system is designed to charge the capacitors (19), wherein the switching apparatus (21) switches the sum of the charging currents to be smaller than the maximum permissible forward current of the resistor (3) by means of the switches (S).

7. Electrical power supply system according to one of Claims 1 to 5,
**characterized in that** the power supply system is designed to charge the capacitors (19), wherein the switching apparatus (21) switches the maximum permissible forward current of the resistor (3) by means of a timer circuit of the main switch (1) .

8. Electrical power supply system according to one of Claims 1 to 7,
**characterized in that**
- the switches (S) are configured as electronic switches and
- the switches (S) are constructed from two transistors arranged in anti-series,
wherein the power supply system is designed to limit the forward current in the resistor (3) by virtue of
- all transistors of the switches (S) that conduct current from the loads (17) to the supply (9) being switched off during the entire precharging process and
- the transistors of the switches (S) that conduct current from the supply (9) to the loads (17) being switched on successively one after the other, wherein
- the transistor of the subsequent switch (S) is switched on only when the temperature in the resistor (3) has fallen below a threshold value.

## Revendications

1. Système d'alimentation en puissance électrique, comprenant un transformateur (0) d'un plan de tension moyenne à un plan de tension basse ;
au moins une résistance (3) électrique, connectée électriquement à l'enroulement secondaire du transformateur (0) et agissant en tant que résistance de précharge, dans lequel, respectivement, un interrupteur (5) de shuntage est monté électriquement en parallèle à la résistance (3) ;
respectivement, un module (9) de redresseur, monté électriquement en série avec la résistance (3), pour l'alimentation d'un réseau (11) de tension continue, auquel sont connectés électriquement des consommateurs (17) électriques, notamment des moteurs électriques, respectivement, au moyen de condensateurs (19) ou d'accumulateurs (20) électriques, dans lequel, au moyen d'un dispositif (21) de commutation, qui commute les interrupteurs (S ; 1) par fil ou sans fil, le courant passant dans la résistance (3) peut être limité, si les condensateurs (19) sont préchargés,
**caractérisé en ce que**
au moyen de l'interrupteur (S), le réseau (11) de tension continue peut être subdivisé en des réseaux partiels de tension continue, et
le système d'alimentation en puissance est constitué pour limiter le courant passant dans la résistance (3), par le fait que
- de tous les interrupteurs (S), seulement un seul est fermé et
- tous les interrupteurs (S) sont fermés les uns après les autres successivement pour précharger leur condensateur (19) connecté et
- chaque interrupteur (S) suivant n'est fermé que si la température de la résistance (3) s'est abaissée en dessous d'une valeur de seuil.

2. Système d'alimentation en puissance électrique suivant la revendication 1,
**caractérisé en ce que**
les interrupteurs (S) sont réalisés en interrupteurs mécaniques ou électroniques.

3. Système d'alimentation en puissance électrique suivant la revendication 1 ou 2,
**caractérisé en ce qu'**
entre l'enroulement secondaire du transformateur (0) et la résistance (3) est interposé électriquement un interrupteur (1) principal, qui peut être commuté au moyen du dispositif (21) de commutation.

4. Système d'alimentation en puissance électrique suivant la revendication 3,
**caractérisé en ce que**
l'interrupteur (1) principal est un interrupteur électrique ou électronique.

5. Système d'alimentation en puissance électrique suivant l'une des revendications précédentes,
**caractérisé en ce que**
les condensateurs (19) sont des parties constituantes de circuits intermédiaires, qui alimentent en puissance, par des onduleurs, les consommateurs (17) électriques, dans lequel, lors de la précharge, les condensateurs (19) sont chargés, avant leur fonctionnement, par l'intermédiaire de la résistance (3).

6. Système d'alimentation en puissance électrique suivant l'une des revendications 1 à 5,
**caractérisé en ce que**
le système d'alimentation en puissance est constitué pour la charge des condensateurs (19), le dispositif (21) de commutation faisant passer, au moyen des interrupteurs (S), la somme des courants de charge plus petite que le courant admissible au maximum passant dans la résistance (3).

7. Système d'alimentation en puissance électrique suivant l'une des revendications 1 à 5,
**caractérisé en ce que**
le système d'alimentation en puissance est constitué pour la charge des condensateurs (19), le dispositif (21) de commutation faisant passer le courant admissible au maximum dans la résistance (3), au moyen d'une temporisation de l'interrupteur (1) principal.

8. Système d'alimentation en puissance électrique suivant l'une des revendications 1 à 7,
**caractérisé en ce que**
- les interrupteurs (S) sont réalisés sous la forme d'interrupteurs électroniques et
- les interrupteurs (S) sont constitués de deux transistors tête-bêche,
dans lequel le système d'alimentation en puissance est constitué de manière à limiter le courant passant dans la résistance (3), par le fait que
- tous les transistors des interrupteurs (S), qui conduisent du courant des charges (17) pour l'injection (9), sont bloqués pendant toute l'opération de précharge et
- les transistors des interrupteurs (S), qui conduisent du courant de l'injection (9) aux charges (17), deviennent passants les uns après les autres successivement, dans lequel
- le transistor de l'interrupteur (S) suivant ne devient passant que si la température de la résistance (3) s'est abaissée en dessous d'une valeur de seuil.
